# EUROPEAN PATENT APPLICATION

(11) **EP 2 896 738 A1**
(43) Date of publication of application: **22.07.2015**
(21) Application number: 14177151.9
(22) Date of filing: 15.07.2014
(51) Int. Cl.: D06F 39/08, D06F 21/02, D06F 23/02

(54) **Washing machine with integrated tub/drum**

(30) Priority: 20.12.2013 KR 20130160232
(71) Applicant: Dongbu Daewoo Electronics Corporation, Seoul (KR)
(72) Inventor: Kim, In Dong, 446-908 Gyeonggi-do (KR); Kim, Jeong Hyeon, 430-705 Gyeonggi-do (KR); Kim, Hye Ung, 156-791 Seoul (KR); Lee, Ju Dong, 403-757 Inchon (KR)
(74) Representative: Rau, Schneck & Hübner Patentanwälte Rechtsanwälte PartGmbB

(57) **Abstract**

The present disclosure relates to a washing machine for washing laundry. The washing machine according to an exemplary embodiment of the present disclosure includes an integrated tub/drum (10) that provides a washing space in which laundry and water are accommodated together. The integrated tub/drum includes a drum side (13), a first end panel (11) connected to one side of the drum side, and a second end panel (12) connected to the other side of the drum side. A drive shaft (20) is connected to the first end panel, and a flow path shaft is connected to the second end panel, and as a result, both the ends of the integrated tub/drum are rotatably and stably supported.

## Description

### TECHNICAL FIELD

The present disclosure relates to a washing machine, and more particularly, to a washing machine including an integral tub/drum configured to store water and accommodate and rotate laundry.

### BACKGROUND

A washing machine refers to an apparatus that eliminates foreign substances on or in laundry by agitating and/or rotating water that in which the laundry is placed. Washing machines may be classified as a pulsator type washing machine that washes the laundry using water flow generated by an operation of a pulsator in the tub, or a drum type washing machine that washes laundry by dropping the laundry vertically, which is caused by rotation of a drum.

The drum type washing machine has a door at a front side so as to put the laundry into the washing machine through the door. The drum type washing machine drops and washes the laundry, and uses relatively small amounts of water and detergent. Specifically, a drum type washing machine in the related art includes a cabinet that forms an external appearance of the washing machine, a tub that is in the cabinet and that stores water, a rotatable drum that is in the tub and tha taccommodates laundry, a drive motor that is behind and/or below the tub and that provides power to the drum, a water supply device that supplies water to the tub, and a drain device that discharges washing water from the tub outside the cabinet after a washing operation ends.

Accordingly, according to the drum type washing machine in the related art, when the laundry is washed, the laundry is put into the tub in a lateral direction by opening a door at a front side of the washing machine, water is supplied to the tub, and then the laundry is washed while a lifter in the drum lifts up and drops the laundry by rotating the drum using power supplied from the drive motor.

As such, the drum type washing machine in the related art includes the tub in addition to the drum. That is, the drum type washing machine in the related art has a structure that has the tub to store water, the drum to wash the laundry, and the drum is in the tub.

However, because the tub is typically made of a plastic material, the tub may be easily contaminated by water scale, mold, mildew, or other foreign substances in the tub when the tub is used over a long period of time. There is a problem in that it is difficult to clean the tub when the tub is contaminated because the drum effectively blocks access to the interior surface of the tub. When the tub, which stores or holds water, is contaminated, the tub may become corroded and the laundry may become contaminated, which may cause a user to incur irritation or a skin disease.

This problem exists in the pulsator type washing machine as well as the drum type washing machine. The reason is that the pulsator type washing machine also includes a reservoir (tub) in the main body thereof.

According to the drum type washing machine in the related art, the drum rotates as one side of the drum is supported by a single shaft, and thus, there may also be a problem in that vibration and noise may occur due to deflection of the shaft.

### SUMMARY

The present disclosure has been made in an effort to provide a washing machine that has a new form in which functions of a tub and a drum are integrated into a single article.

Particularly, the present disclosure has been made in an effort to provide a washing machine that has a new form in which a drum also performs water storage and drainage functions of the tub, so that laundry may be washed only using the drum without using the tub, or using an integrated tub/drum.

One or more exemplary embodiments of the present disclosure provide a washing machine including an integrated tub/drum that provides a washing space in which laundry and water are accommodated together.

The integrated tub/drum includes a drum side (e.g., a cylindrical or conical side wall), a first end panel connected to one side of the drum side, and a second end panel connected to another side (e.g., an opposited side) of the drum side.

A rotatable drive shaft is connected to the first end panel of the integrated tub/drum, and the drive shaft is supported by a drive shaft bearing.

The drive shaft is connected to a drive motor, and receives rotational force from the drive motor.

The drive motor may be directly connected to the drive shaft, or may be connected to the drive shaft through a belt or the like.

Meanwhile, the second end panel is connected with a flow path shaft, and the flow path shaft provides a passage configured to supply water into the integrated tub/drum and/or discharge water from the integrated tub/drum.

The flow path shaft may rotate with the integrated tub/drum, and a rotatable flow path shaft bearing is configured to support the flow path shaft.

Opposite ends of the integrated tub/drum may thus be rotatably supported by the flow path shaft, the flow path shaft bearing, the drive shaft, and the drive shaft bearing, and as a result, the integrated tub/drum may stably rotate.

The second end panel has a rim at or in a center thereof, extending in a direction of a rotation axis of the integrated tub/drum, and the flow path shaft may be coupled to and/or may enclose an inner and/or outer surface of the rim.

In order to reinforce the coupling force between the second end panel and the flow path shaft, the flow path shaft may have a flange that extends in a radial direction and that is coupled to an inner or outer surface of the second end panel.

The flow path shaft may include an inner coupling portion that is coupled to the inner surface of the second end panel, and an outer coupling portion that is coupled to the outer surface of the second end panel, and therefore, the flow path shaft may comprise a structure that is coupled to both the inner surface and the outer surface of the second end panel.

The inner coupling portion of the flow path shaft may include an inner flange that extends in a radial direction and is coupled to the inner surface of the second end panel, and the outer coupling portion may include an outer flange that extends in the radial direction and is coupled to the outer surface of the second end panel.

When the rim is on the second end panel, the flow path shaft may include an outer coupling portion that is coupled to and/or that encloses the outer surface of the rim, and an inner coupling portion that is coupled to and/or that encloses the inner surface of the rim.

Meanwhile, the washing machine may further include a hollow fixed shaft in the flow path shaft; a bearing between the hollow fixed shaft and the flow path shaft; a water supply passage or a water drain passage in the hollow fixed shaft configured to supply water into the integrated tub/drum or discharge water from the integrated tub/drum; and a watertight seal between the hollow fixed shaft and the flow path shaft.

The water supply passage and/or the drain passage may be in the fixed shaft, and may include a water supply pipe and/or a drain pipe that extends through the second end panel into the interior of the integrated tub/drum.

The water supply pipe may extend upward with respect to or relative to a rotation axis of the integrated tub/drum, and the water drain pipe may extend downward with respect to or relative to the rotation axis.

The present disclosure provides a new type of washing machine that and uses an integrated tub/drum, unlike the washing machines in the related art.

The present disclosure provides the washing machine in which opposite ends of the integrated tub/drum are supported, and as a result, the integrated tub/drum may stably rotate.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a view illustrating a washing machine of one or more exemplary embodiments according to the present disclosure.
FIG. 2 is a detailed view of an exemplary part of the washing machine of FIG. 1.
FIGS. 3 to 10 are views illustrating various exemplary embodiments of connection structures between an integrated tub/drum and a flow path shaft.

### DETAILED DESCRIPTION

In the following detailed description, reference is made to the accompanying drawings, which form a part hereof. The illustrative embodiments described in the detailed description, drawings, and claims are not meant to be limiting. Other embodiments may be utilized, and other changes may be made, without departing from the spirit or scope of the subject matter presented here.

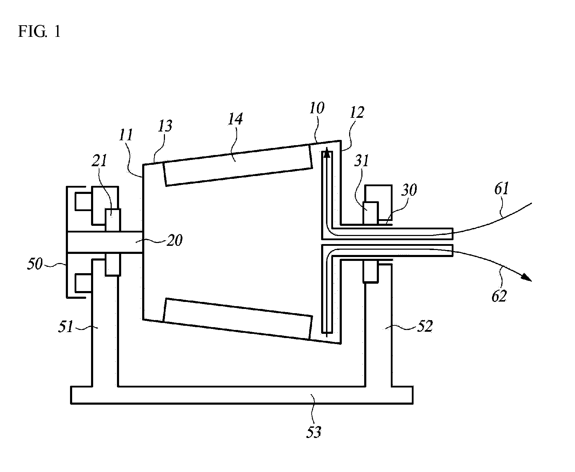

Exemplary embodiments of the present disclosure will be described with reference to FIGS. 1 to 10.

According to the washing machine illustrated in FIG. 1, opposite ends of the integrated tub/drum 10 are supported by a first supporting frame 51 and a second supporting frame 52 that are, in turn, on a base 53. The first supporting frame 51, second supporting frame 52, and base 53 may comprise a metal, such as aluminum, an aluminum alloy, steel, etc. In an alternative embodiment, the first supporting frame 51 and second supporting frame 52 are not coupled to a base, but instead, may be independently connected or coupled to the cabinet or other exterior structure of the washing machine.

The integrated tub/drum 10 provides a washing space in which laundry is accommodated (e.g., held) and washed, and that stores or holds washing water. The washing machine in the related art, which has both a tub and a drum, has a structure in which the tub serves to store washing water, and the drum has a plurality of holes in a side wall thereof so that the washing water in the tub may flow into and out of the drum. The present exemplary integrated tub/drum 10 does not include a separate tub, and thus the washing machine has a structure in which the integrated tub/drum 10 may store or hold water. To this end, the washing machine has a structure in which no holes are in a side wall of the integrated tub/drum 10, unlike the related art.

Although the integrated tub/drum 10 does not have holes, one or more lifters 14 are in the integrated tub/drum 10 (e.g., extending from an inner sidewall) and are configured to lift up and drop the laundry.

The integrated tub/drum 10 includes a drum side or sidewall 13 that encloses or surrounds a rotation axis of the integrated tub/drum 10 and extends in a direction of the rotation axis.

Although not illustrated, a door may be on, in and/or at the drum side 13 so that the laundry can be put into and taken out of the integrated tub/drum 10.

One end of the drum sidewall 13 is closed by a first end panel 11, and the other end of the drum sidewall 13 is closed by a second end panel 12. The first end panel 11 closes the entirety of the one end of the drum sidewall 13, but the second end panel 12 has a through hole in a center thereof, and thus the second end panel 12 closes the other end of the drum sidewall 13 except for the through hole.

A drive shaft 20 is connected to the first end panel 11. Although not illustrated, the drive shaft 20 and the first end panel 11 may be connected with each other by a spider (e.g., a multi-armed, radial structure attached to both the drive shaft 20 and the first end panel 11, configured to distribute the rotational force from the drive shaft 20 across a relatively large area of the first end panel 11). Because the connection structure of the shaft 20 and the end panel 11 using a spider is also used in a drum type washing machine in the related art, a detailed description thereof will be omitted.

The rotatable drive shaft 20 is supported by a drive shaft bearing 21 that is on and/or in the first supporting frame 51. To this end, the first supporting frame 51 may have a circular hole, and the drive shaft bearing 21 (such as a roller bearing, a needle roller bearing, a deep groove ball bearing, an angular contact ball bearing, a four-point ball bearing, a tapered roller bearing, a bushing-type ball bearing, trust and shaft ball bearing, a radial bearing, a linear ball bearing, etc.) may be in the circular hole.

The drive shaft 20 may be directly connected to a drive motor 50, which is mounted on the first supporting frame 51 so as to provide rotational force directly to the drive shaft 20. The drive shaft 20 and the drive motor 50 are directly connected with each other in one exemplary embodiment, but the drive shaft 20 and the drive motor 50 may be connected with each other by a power transmission mechanism such as a belt and pulleys in other exemplary embodiments. In this other case, the drive motor 50 may be mounted on the first supporting frame 51 and/or the base 53.

A flow path shaft 30 is connected to the second end panel 12. The flow path shaft 30 is hollow, has a cylindrical shape, and provides a passage configured to supply and discharge water. The passage communicates with the through hole of the second end panel 12, and then may communicate with the washing space in (e.g., the interior of) the integrated tub/drum 10.

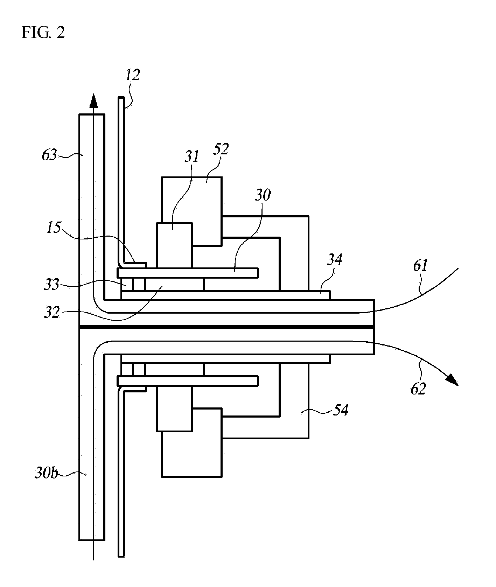

The flow path shaft 30, the second end panel 12, and associated peripheral structures will be described in detail with reference to FIG. 2.

First, the second end panel 12 includes a rim (or flange or extension) 15 that is at the through hole and/or the center, configured to extend outward from the integrated tub/drum 10 in the direction of the rotation axis.

The flow path shaft 30 is connected to and comes into contact with an inner circumferential surface of the rim 15 of the second end panel 12. The flow path shaft 30 may extend under and/or overlap with the inner circumferential surface of the rim 15. For example, the connection between the rim 15 and the flow path shaft 30 may be achieved by spot welding an outer circumferential surface of the rim 15.

The rotatable flow path shaft 30, which is connected to the second end panel 12, is supported by a flow path shaft bearing 31 on and/or in the second supporting frame 52. To this end, the second supporting frame 52 has a hole having a diameter that is greater than an outer diameter of the flow path shaft 30, and the flow path shaft bearing 31 is fixed and/or secured in the hole.

The flow path shaft bearing 31 may comprise a bearing that has the same structure as or a different structure from (but similar or identical thickness/diameter dimensions as) the drive shaft bearing 21.

One end of the integrated tub/drum 10 is connected with the drive shaft 20 and is rotatably supported by the drive shaft bearing 21, and the other end of the integrated tub/drum 10 is connected with the flow path shaft 30 and is rotatably supported by the flow path shaft bearing 31. As a result, both ends of the integrated tub/drum 10 are rotatably supported.

A fixed shaft 34 is in the passage of the flow path shaft 30, and a bearing 32 (e.g., a needle roller bearing) is between an outer circumferential surface of the fixed shaft 34 and an inner circumferential surface of the flow path shaft 30. The bearing 32 is thin and wide relative to outside bearing 31. When the integrated tub/drum 10 rotates, the flow path shaft 30 rotates with the integrated tub/drum 10, but the fixed shaft 34 does not rotate.

In order to prevent the water in the integrated tub/drum 10 from leaking to the outside, a seal 33 is installed between the fixed shaft 34 and the flow path shaft 30. The water seal 33 is positioned inside the bearing 32 with respect to the integrated tub/drum 10.

The water seal 33 may have the same structure as a seal that is installed between a shaft connected to a drum of a drum type washing machine in the related art and an inner circumferential surface of a hole in a tub through which the shaft passes, and a detailed description thereof will be omitted.

The fixed shaft 34 is connected to and supported by the second supporting frame 52 through a shaft fixing portion or frame 54. One end of the shaft fixing portion 54 is open, and another (e.g., opposite) end of the shaft fixing portion 54 has a round or circular with a hole therein through which the fixed shaft 34 passes or is inserted. The shaft fixing portion or frame 54 generally has a cylindrical shape.

The open end of the shaft fixing portion 54 may be fastened to the second supporting frame 52 by one or more (e.g., a plurality of) bolts and nuts, screws, or the like, and the fixed shaft 34 is inserted into and supported by the hole or opening at or in the other/opposite end of the shaft fixing portion 54.

The shaft fixing portion 54 may support the fixed shaft 34, and also serve to cover and protect a location where the flow path shaft 30 and the like are installed. The shaft fixing portion 54 may completely cover the structures of the flow path shaft 30 and the like so that they are not visible from the outside.

The fixed shaft 34 is hollow, and a water supply pipe 63, which provides a water supply passage 61, and a drain pipe 64, which provides a water drain passage 62, are in the fixed shaft 34.

The water supply pipe 63 is above the drain pipe 64, and the water supply pipe 63 and the drain pipe 64 extend into the washing space (interior) or the integrated tub/drum 10 through the fixed shaft 34. The water supply pipe 63 extends upward with respect to the rotation axis of the integrated tub/drum 10, and the drain pipe 64 extends downward with respect to the rotation axis.

The water supply pipe 63 and the drain pipe 64 extend into the integrated tub/drum 10, but are spaced apart from the inner wall / surface of the integrated tub/drum 10 so as not to affect rotation of the integrated tub/drum 10. The spacing between the water supply pipe 63 / drain pipe 64 the inner wall / surface of the integrated tub/drum 10 is generally from about 0.2-3 cm (e.g., about 0.5 cm).

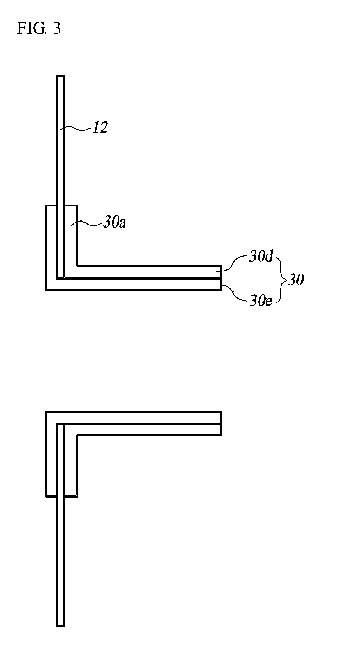

The connection structure between the flow path shaft 30 and the second end panel 12 may be implemented in many different ways, and FIGS. 3 to 10 illustrate other exemplary embodiments of the connection structure.

First, in an exemplary embodiment illustrated in FIG. 3, the flow path shaft 30 have a dual structure (e.g., an inner wall and an outer wall), and the structure may comprise an outer flow path shaft 30d and an inner flow path shaft 30e.

The flow path shaft 30 has an outer flange 30a and an inner flange 30b that extend outward in a radial direction from the rotation axis, and the outer flange 30a and the inner flange 30b are coupled to the second end panel 12 while enclosing a peripheral portion of the through hole of the second end panel 12 (e.g., similar to the form of a sandwich).

Bonding between the outer flange 30a, the inner flange 30b and the second end panel 12 may be implemented by spot welding the outer flange 30a and the inner flange 30b.

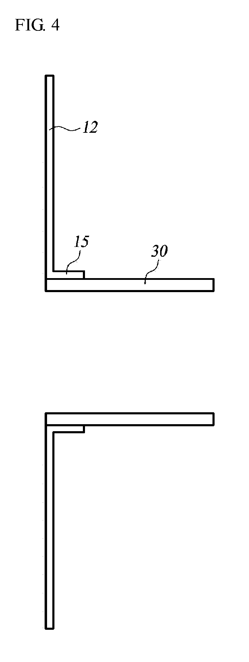

Because the exemplary embodiment illustrated in FIG. 4 is identical to the exemplary embodiment illustrated in FIG. 2, a detailed description thereof will be omitted.

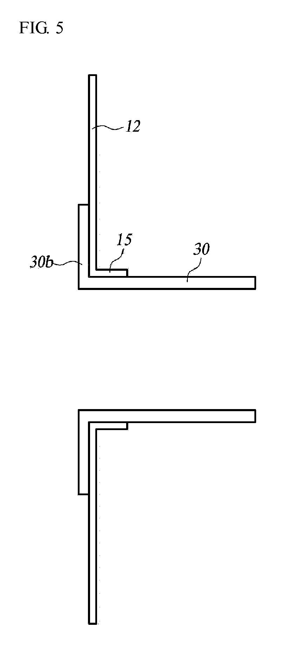

In the exemplary embodiment illustrated in FIG. 5, a rim 15 extends from the second end panel 12, and a flange 30b extends in a radial direction away from the flow path shaft 30. The flow path shaft 30 is inserted into and/or contacts the rim 15 of the second end panel 12 such that the flange 30b contacts and can be coupled to an inner surface of the second end panel 12.

In the exemplary embodiment of FIG. 5, bonding between the second end panel 12 and the flow path shaft 30 may be implemented by spot welding an outer circumferential surface of the rim 15 of the second end panel 12 and spot welding the flange 30b of the flow path shaft 30.

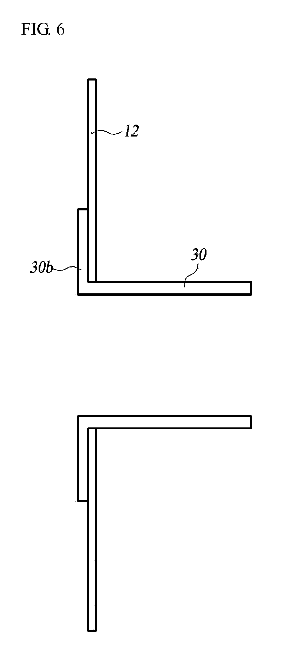

The exemplary embodiment illustrated in FIG. 6 is identical to the exemplary embodiment illustrated in FIG. 5, except that a second end panel 12 does not have a rim 15. Thus, bonding between the second end panel 12 and the flow path shaft 30 may be implemented by spot welding the flange 30b of the flow path shaft 30.

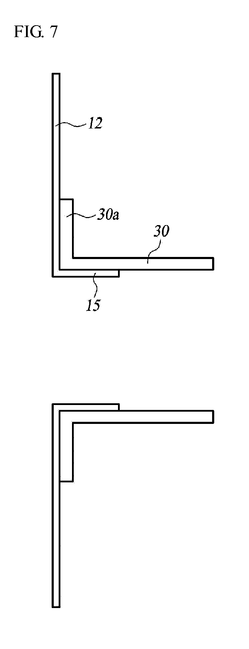

The exemplary embodiment illustrated in FIG. 7 has a structure in which the rim 15 is on a second end panel 12, and the rim 15 is inserted into and coupled to the flow path shaft 30. The flow path shaft 30 has a flange 30a that extends outward in a radial direction, and the flange 30a is coupled to and comes into contact with an outer surface of the second end panel 12.

In the exemplary embodiment of FIG. 7, bonding between the second end panel 12 and the flow path shaft 30 may be achieved by spot welding a portion of the flow path shaft 30 that encloses the rim 15 of the second end panel 12, and spot welding the flange 30a.

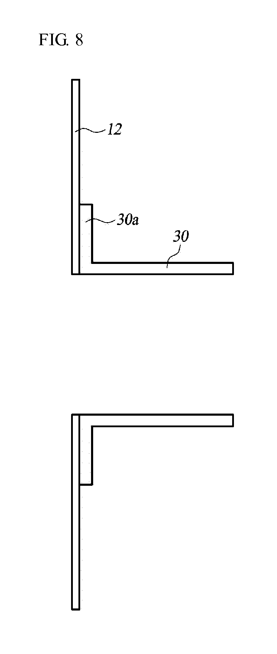

The exemplary embodiment illustrated in FIG. 8 is identical to the exemplary embodiment illustrated in FIG. 7, except that a rim 15 is not on a second end panel 12. Thus, bonding between the second end panel 12 and the flow path shaft 30 may be achieved by spot welding the flange 30a.

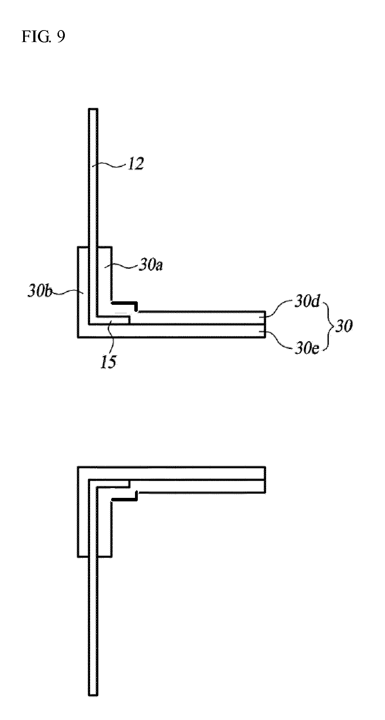

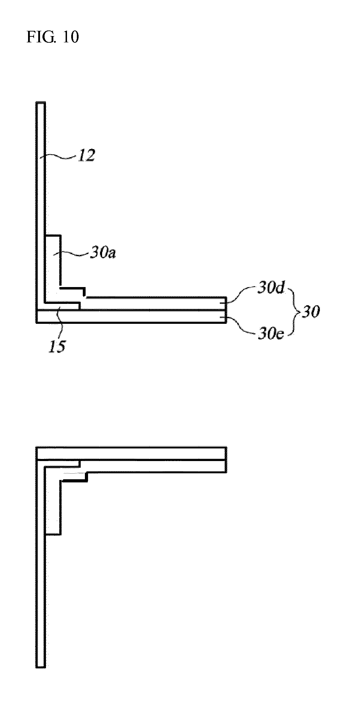

Exemplary embodiments illustrated in FIG. 9 and FIG. 10 are identical to the exemplary embodiment illustrated in FIG. 3, except that the rim 15 is formed on the second end panel 12. In the exemplary embodiments of FIG. 9 and FIG. 10, bonding between the second end panel 12 and the flow path shaft 30 may be achieved by spot welding an outer circumferential surface of the flow path shaft 30 that corresponds to the rim 15 of the second end panel 12, in addition to the bonding described in the exemplary embodiment illustrated in FIG. 3.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A washing machine comprising:
an integrated tub/drum (10) that provides a washing space, accommodates laundry and water together, and includes a drum side (13), a first end panel (11) on one end of the drum side (13), and a second end panel (12) connected to another side of the drum side (13);
a drive shaft (20) connected to the first end panel (11);
a rotatable drive shaft bearing (21) that supports the drive shaft (20);
a drive motor (50) connected to the drive shaft (20);
a flow path shaft (30) connected to the second end panel (12), including a passage configured to supply water into the washing space of the integrated tub/drum (10) and/or discharge water from the washing space of the integrated tub/drum (10); and
a rotatable flow path shaft bearing (31) that supports the flow path shaft (30).

2. The washing machine of claim 1, wherein the second end panel (12) has a rim (15) at a center thereof that extends in a direction of a rotation axis of the integrated tub/drum (10), and the flow path shaft (30) is connected to the rim (15) and encloses an inner or outer surface of the rim (15).

3. The washing machine of claim 1, wherein the flow path shaft (30) has a flange (30a, 30b) that extends in a radial direction and is coupled to an inner or outer surface of the second end panel (12).

4. The washing machine of claim 1, wherein the flow path shaft (30) includes an inner coupling portion that is coupled to an inner surface of the second end panel (12), and an outer coupling portion that is coupled to an outer surface of the second end panel (12).

5. The washing machine of claim 4, wherein the inner coupling portion of the flow path shaft (30) includes an inner flange (30b) that extends in a radial direction and is coupled to the inner surface of the second end panel (12), and the outer coupling portion includes an outer flange (30a) that extends in the radial direction and is coupled to the outer surface of the second end panel.

6. The washing machine of claim 2, wherein the flow path shaft (30) includes an outer coupling portion that is coupled and/or that encloses the outer surface of the rim (15), and an inner coupling portion that is coupled to and/or that encloses the inner surface of the rim (15).

7. The washing machine of claim 1, further comprising:
a hollow fixed shaft (34) in the flow path shaft (30);
a bearing (32) between the fixed shaft (34) and the flow path shaft (30);
a water supply passage (61) and/or a drain passage (62) in the fixed shaft (34), configured to supply water into the washing space of the integrated tub/drum (10) or discharge water from the washing space of the integrated tub/drum (10); and
a seal (33) between the fixed shaft (34) and the flow path shaft (30).

8. The washing machine of claim 7, wherein the water supply passage (61) and the drain passage (62) are in the fixed shaft (34), and the water supply pipe (63) and the drain pipe (64) extend into the interior of the second end panel (12).

9. The washing machine of claim 8, wherein the water supply pipe (63) extends upward with respect to a rotation axis of the integrated tub/drum (10), and the drain pipe (64) extends downward with respect to the rotation axis.

10. The washing machine of claim 7, further comprising:
a supporting frame (51, 52) on which the flow path shaft bearing (31) is installed, and through which the fixed shaft (34) passes; and
a shaft fixing portion (54) that is connected between the fixed shaft (34) and the supporting frame (51, 52) configured to support the fixed shaft (34), and through which the water supply passage (61) or the water drain passage passes (62).

11. The washing machine of claim 2, wherein the flow path shaft (30) has a flange (30a, 30b) that extends in a radial direction and is coupled to an inner or outer surface of the second end panel (12).

12. The washing machine of claim 2, wherein the flow path shaft (30) includes an inner coupling portion that is coupled to an inner surface of the second end panel (12), and an outer coupling portion that is coupled to an outer surface of the second end panel (12).

13. The washing machine of claim 12, wherein the inner coupling portion of the flow path shaft (30) includes an inner flange (30b) that extends in a radial direction and is coupled to the inner surface of the second end panel (12), and the outer coupling portion includes an outer flange (30a) that extends in the radial direction and is coupled to the outer surface of the second end panel (12).

14. The washing machine of claim 2, further comprising:
a hollow fixed shaft (34) in the flow path shaft (30);
a bearing (32) between the fixed shaft (34) and the flow path shaft (30);
a water supply passage (61) and/or a drain passage (62) in the fixed shaft (34), configured to supply water into the washing space of the integrated tub/drum (10) or discharge water from the washing space of the integrated tub/drum (10); and
a seal (33) between the fixed shaft (34) and the flow path shaft (30).

15. An integrated tub/drum (10) for a washing machine, comprising:
a drum side (13) that has an inner surface with one or more lifters (14) thereon;
a first end panel (11) that is connected to the drum side (13) and is configured to close one side of the drum side (13);
a second end panel (12) that is connected to the drum side (13) and is configured to close another side of the drum side (13), and has a through hole at or in a center thereof;
a drive shaft (20) that is connected to the first end panel (11), and that receives a rotational force from a motor (50); and
a hollow shaft (30) that provides a passage that communicates with the through hole of the second end panel (12) for a flow path configured to supply or discharge water, and that overlaps and is coupled to an inner or outer surface of a rim (15) that extends from the through hole of the second end panel (12), or extends outward in a radial direction with respect to the through hole and is configured to overlap and be coupled to an inner or outer surface of the second end panel (12).
